# EUROPÄISCHE PATENTSCHRIFT

(11) **EP 1 767 917 B1**
(45) Veröffentlichungstag und Bekanntmachung des Hinweises auf die Patenterteilung: **03.08.2011**
(21) Anmeldenummer: 06019746.4
(22) Anmeldetag: 21.09.2006
(51) Int. Cl.: G01M 3/16

(54) **Anordnung und Verfahren zur Ortung einer Leckage an Feuchtigkeits-Abdichtschichten, insbesondere für Gebäudeteile**
System and method for locating a leakage on moisture sealing coatings, in particular for building parts
Dispositif et procédé destinés à la localisation d'une fuite dans des couches d'étanchéification de l'humidité, en particulier pour des éléments de construction

(30) Priorität: 26.09.2005 DE 102005046025
(43) Veröffentlichungstag der Anmeldung: 28.03.2007
(73) Patentinhaber: DÖLCO-Exquisit, 79112 Freiburg (DE)
(72) Erfinder: Dörle, Alfred, 79112 Freiburg (DE)
(74) Vertreter: Otten, Roth, Dobler & Partner

(56) Entgegenhaltungen:
- EP-A- 1 052 491
- WO-A-95/02809
- DE-U1-202005 006 827

## Beschreibung

Die vorliegende Erfindung betrifft eine Anordnung und ein Verfahren zur Ortung einer Leckage an Feuchtigkeits-Abdichtschichten nach den Oberbegriffen der Ansprüche 1 und 9.

### Stand der Technik:

Zur Ortung von Leckagen an Feuchtigkeits-Abdichtschichten insbesondere für Gebäudeteile, wie z.B. Flachdächer, Terrassen, Balkone oder dergleichen, sind aus der EP 1 052 491 A1 oder der inhaltsgleichen DE 199 21 556 C2 einschließlich dem dort genannten Stand der Technik entsprechende Verfahren und Anordnungen bekannt. Dabei wird die Oberseite eines Flachdaches vor Durchführung einer Messung zur Durchfeuchtung bewässert und damit entsprechend leitfähig gemacht. Anschließend wird die durchfeuchtete Oberseite mit einer durch eine Tropfstelle gebildeten durchfeuchteten Unterseite eines Flachdaches mittels elektrischer Geräte und Leitungen zur Ausbildung eines Messstromkreises verbunden. Dieser Messstromkreis wird durch eine die eventuell vorhandene Leckage durchdringende, entsprechend leitfähige Flüssigkeit im betreffenden Deckenbereich geschlossen.

Für die Ortung der Leckage ist eine mobile Kontaktstelle in der Form eines Abtastleiters vorgesehen, welcher die Verbindung des Messstromkreises zur durchfeuchteten Oberseite des Dachs darstellt. Dieser Abtastleiter wird Punkt für Punkt über die Oberfläche des Daches bewegt. Dabei verändert sich der elektrische widerstand im Messstromkreis in Abhängigkeit des Abstandes zwischen der mobilen Kontaktstelle und dem Ort der Leckage. Durch die widerstandsänderung wird eine Amplitudenänderungen des Messsignales hervorgerufen (Änderung der Stromstärke), die ihrerseits in eine optische und eine akustische Signalisierung aufgrund einer Annäherung bzw. einer Entfernung des Abtastleiter von der Leckagestelle umgewandelt wird.

Dieses Verfahren zur Ortung von Undichtigkeitsstellen auf Flachdächern wird mittlerweile sehr erfolgreich eingesetzt. Abhängig von der Größe der auf Dichtigkeit hin zu überprüfenden Dachfläche ist für den durchzuführenden Prüfvorgang jedoch ein sehr hoher Zeitaufwand erforderlich, speziell für den Fall, dass nur ein Abtastleiter pro Dach eingesetzt werden kann, da sich somit die Messkreise gegenseitig beeinflussen.

Aus dem Dokument DE 20 2005 006 827 U1 ist weiterhin eine Anordnung zur Ortung einer Leckage an Feuchtigkeits-Abdichtschichten für Gebäudeteile bekannt geworden, die mit mindestens einer elektrisch isolierenden oberen Dichtbahn abgedichtet ist, wobei zwischen der Oberseite der Dichtbahn und einer Unterseite der Dichtbahn eine Gleichspannungsquelle angelegt ist, die mit einem Messgerät mit zwei Messfühlern abtastbar ist. Die Unterseite der Dichtbahn umfasst eine Metallgitterbahn als elektrisch leitfähiges Material, welche mit dem Pluspol der Gleichspannungsquelle verbunden ist.

### Aufgabe und Vorteile der Erfindung:

Der vorliegenden Erfindung liegt daher die Aufgabe zu Grunde, ein Verfahren und eine Anordnung der eingangs dargelegten Art dahingehend zu verbessern, dass eine wesentlich wirtschaftlichere Arbeitsweise der Ortungsgeräte erzielt werden kann und eine Ortung einer Leckage mit mehreren Leckage-Detektoren ohne gegenseitige Störung oder Beeinflussung möglich ist.

Diese Aufgabe wird durch die Merkmale der Ansprüche 1 und 9 gelöst. In den Unteransprüchen sind vorteilhafte und zweckmäßige Weiterbildungen der Erfindung angegeben.

Demgemäß betrifft die vorliegende Erfindung eine Anordnung zur Ortung einer Leckage an Feuchtigkeits-Abdichtschichten für Gebäudeteile, wie z.B. Flachdächer, Terrassen, Balkone oder dergleichen. Diese Anordnung umfasst ein Basis- oder auch Hauptgerät, welches dazu geeignet und bestimmt ist, einen ersten Messkreis mit einem Prüfsignal zu beaufschlagen, wobei durch Schließen dieses Messkreises mittels eines ersten Detektors, z.B. in der Form eines Taststabes, ein von einem Abstand des Detektors zum Ort der Leckage abhängiges Messsignal erzeugt wird. Je nach Annäherung oder Entfernung des Taststabes zur bzw. von der Leckage verändert sich auch das dabei erzeugte Messsignal.

Die erfindungsgemäße Anordnung zeichnet sich nun dadurch aus, dass sie mindestens einen weiteren Messkreis ausbilden kann, welchem ein weiterer Leckagedetektor zur Ortung dieser ersten und/oder gegebenenfalls auch einer weiteren Leckage zugeordnet ist, wobei zur Erzeugung eines jeweiligen individuellen Messsignals eine Modulation des Prüfsignals vorgesehen ist. Dadurch ist es möglich, jedem einzelnen von mehreren, d.h. einer Vielzahl von gleichzeitig in Betrieb stehenden Leckagedetektoren ein eindeutiges Messsignal zuzuordnen, anhand dessen Signaländerung die ihn jeweils bedienende Person eine Annäherung bzw. eine Entfernung zu einer gesuchten Leckage erkennen kann. Eine gegenseitige Störung oder Beeinflussung der verschiedenen Leckagedetektoren scheidet demnach aus. Der Kern der Erfindung liegt demnach in der Verwendung von mehreren Messkreisen mit mehreren Detektoren, wobei ein jeweils individuelles Messsignal durch eine Modulation des Prüfsignals erzeugt wird, und das Prüfsignal dabei mittels eines Modulationssignals derart auf die Messkreise geschaltet wird, dass die vom Abstand des jeweiligen Leckagetasters zur gesuchten Leckage abhängigen Messsignale zeitversetzt aktiv sind. Das Prüfsignal kann z.B. durch eine Zerhackerschaltung auf die einzelnen Messkreise aufgeteilt werden.

Insbesondere im Hinblick auf eine störungsfreie Auswertung der Messsignale der einzelnen Messkreise ist es besonders vorteilhaft, wenn zu einem bestimmten Zeitpunkt jeweils nur ein Messkreis aktiv ist. Beispielsweise kann das Prüfsignal dafür derart moduliert werden, dass eine bestimmte Prüf-Zeiteinheit in eine bestimmte Anzahl von einzelnen Prüf-Zeitfenstern unterteilt (zerhackt) wird, wobei jedes Zeitfenster einem bestimmten Leckagedetektor zugeordnet ist. Nach dem Ablauf einer ersten Zeiteinheit folgt im Anschluss eine nächste Zeiteinheit usw., so dass sich ein wiederkehrender Prüfablauf ergibt.

Bei einem bausteinartigen Aufbau einer solchen Anordnung kann das Basisgerät beispielsweise fünf oder zehn solche Messkreise als Module umfassen, denen jeweils ein eigenes Zeitfenster pro Zeiteinheit zugeordnet ist. Damit kann im Rahmen der maximal von der erfindungsgemäßen Anordnung betreibbaren Module die Zahl der ihnen jeweils zugeordneten Detektoren in Abhängigkeit der Größe des zu prüfenden Daches bzw. auch in Abhängigkeit der zur Verfügung stehenden Personen zur Ortung der gesuchten Leckage nahezu beliebig variiert werden. Hierdurch kann insbesondere bei größeren Dächern, deren Flächen nicht selten 10.000 m² übersteigen, eine enorme Zeitverkürzung bei der Ortung einer gesuchten Leckage gewährleistet werden.

Die Anzahl der Module (Messkreise) und der ihnen zugeordneten Zeitfenster pro Zeiteinzeit können selbstverständlich in anderen Ausführungsformen dahingehend abweichen, dass sie mehr oder weniger Module umfassen und die Zeitfenster den messtechnischen Gegebenheiten angepasst werden. Auch ist eine entsprechend der gerade gleichzeitig in Betrieb stehenden Detektoren wählbare Aufteilung an Zeitfenster pro Zeiteinheit oder dergleichen mehr Abwandlungen denkbar.

Neben einer Zeitmodulation sind aber auch noch weitere Modulationsmöglichkeiten für das Prüfsignal denkbar, wie z.B. Frequenzmodulation, Amplitudenmodulation und dergleichen mehr.

In einer Ausführungsform, in der das Prüfsignal ein elektrisches Potential (elektrische Spannung) ist, welches an einen ersten Messkreis angelegt werden kann, kann das Messsignal beispielsweise eine in dem Messkreis erzeugte Signalamplitude (elektrischer Strom) sein.

Zur Erzeugung des Prüfsignals bestehen mehrere Möglichkeiten. In einer ersten Ausführungsform könnte beispielsweise nach der Anzahl vorgesehener Messkreise, welche gegebenenfalls der Anzahl der oben beschriebenen Module entspricht, ein Prüfsignalgenerator pro Messkreis vorgesehen sein, z.B. in der Form von Spannungsquellen. Die betreffenden Spannungsquellen können dann jeweils in dem ihnen zugeordneten zeitfenster im betreffenden Messkreis durch das Modulationssignal aktiv bzw. außerhalb des Zeitfensters inaktiv geschaltet werden. Damit ist ein sich ständig wiederholender Wechsel (ein Durchschalten) eines aktiven Zustandes von einem Messkreis zu einem nächsten Messkreis möglich.

In einer demgegenüber abgewandelten Ausführungsform ist es aber auch vorstellbar, dass lediglich ein Signalgenerator, beispielsweise ebenfalls eine Spannungsquelle vorgesehen ist, die ein entsprechendes Prüfsignal in der Form eines elektrischen Potentials erzeugt. Abweichend von der zuvor beschriebenen Ausführungsform kann dieses von einer Spannungsquelle erzeugte Prüfsignal, entsprechend des oben beschriebenen Zeitfensters, von einem Messkreis auf einen nächsten Messkreis reihum weitergeschaltet werden. Somit ist auch mit dieser Ausführungsform sichergestellt, dass jeweils nur ein Messkreis während eines Zeitpunkts aktiv ist.

Das als Prüfsignal generierte elektrische Potential einer der beiden oben beispielhaft dargestellten Ausführungsformen kann unterschiedliche Formen aufweisen. In einer bevorzugten Ausführungsform kann es z.B. eine mit einer Frequenz von 5 kHz beaufschlagte Wechselspannung sein. Die Form der Wechselspannung kann als Sinusspannung, Dreieckspannung, Rechteckspannung oder dergleichen mehr ausgebildet sein.

Solange die dem Prüfsignal aufgeprägte Frequenz im hörbaren Bereich liegt, kann die Auswertung des Messsignals mit einem vergleichsweise einfachen schaltungstechnischen Aufwand realisiert werden. Hierzu ist lediglich die Umsetzung der Intensität des Messsignales in ein akustisches und/oder optisches Signal erforderlich. Diese Auswertung der Messsignale der einzelnen Messkreise kann je nach Ausführungsform entweder im Basis- oder Hauptgerät der Anordnung erfolgen, oder auch in dem dem jeweiligen Messkreis zugeordneten Detektor bzw. einem ihm zugeordneten Handgerät.

Bei einer Ausführungsform, bei der die Auswertung der Messsignale in dem Hauptgerät vorgesehen ist, könnte beispielsweise zur Erleichterung der Sucharbeit eine akustische Signalisierung einer Annäherung bzw. Entfernung des Leckagedetektors von der gesuchten Leckage über einen drahtlos mit dem Basisgerät in Verbindung stehenden Signalgeber, z.B. einen Kopfhörer signalisiert werden. Für die Ortung der Leckage wäre dann pro Messkreis nur noch eine einzige Leitung zwischen dem Basisgerät und dem jeweiligen Leckagedetektor erforderlich, um den betreffenden Messkreis über die befeuchtete Oberfläche des zu prüfenden Daches durch die Leckage hindurch zum Basisgerät zu schließen.

Bei einer Ausführungsform, bei der die Auswertung der Messsignale in dem jeweiligen Detektor oder einem ihm zugeordneten Handgerät vorgesehen ist, könnten die optischen oder akustischen Anzeigemittel entweder in dem Detektor und/oder in dem Handgerät angeordnet sein. Als optische Anzeigemittel sind beispielsweise LEDs, Zeigerinstrumente und dergleichen mehr vorstellbar. Als akustische Signalmittel sind Lautsprecher vorstellbar, und, wie im vorigen Beispiel, selbstverständlich auch Kopfhörer, welche gegebenenfalls zusätzlich zu Lautsprechern ausgebildet sein können. Die Verbindung zwischen dem Kopfhörer und der Auswerteeinheit kann wahlweise leitungsgebunden oder leitungsungebunden sein.

### Ausführungsbeispiel:

Die Erfindung wird anhand der Zeichnungen und der nachfolgend darauf Bezug nehmenden Beschreibung näher erläutert. Es zeigen
- Figur 1: eine schematische Draufsicht auf eine Dachfläche, die von zwei Bedienpersonen mittels einer erfindungsgemäßen Prüfanordnung auf eine Leckage hin untersucht wird;
- Figur 2: eine Schaltungsanordnung für den Aufbau von vier Messkreisen zur Ortung einer Leckage;
- Figur 3: eine Signalisierungseinheit.

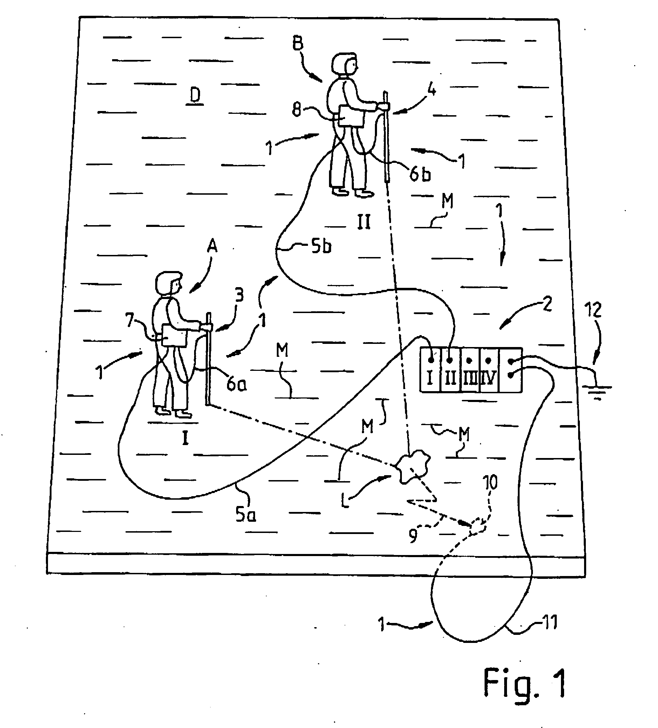

Die Figur 1 zeigt eine schematische Draufsicht auf eine Dachfläche D, welche eine Leckagestelle L aufweist. Zur Ermittlung dieser Undichtigkeitsstelle an einer Feuchtigkeits-Abdichtschicht des Flachdaches wird eine Anordnung 1 zur Ortung einer Leckage eingesetzt, die ein Basisgerät 2 und Detektoren 3, 4 umfasst. Diese Detektoren 3, 4 sind hier beispielhaft für die erfindungsgemäße gleichzeitige Einsatzmöglichkeit mehrerer Detektoren auf einer Dachfläche dargestellt. Im vorliegenden Beispiel sind in dem Basisgerät beispielhaft vier Messkreise I - IV vorgesehen. An den Messkreisen I, II sind die Detektoren 3, 4 über Leitungen 5a, 5b, 6a, 6b und Handgeräte 7, 8 angeschlossen.

Um die Leckage L detektieren zu können, wird in dem Basisgerät 2 ein Prüfsignal zur Beaufschlagung eines ersten Messkreises I erzeugt, welches durch Schließen des Messkreises I ein von der Entfernung des Detektors 3 zum Ort der Leckage L abhängiges Messsignal erzeugt. Der Messkreis I wird durch in Kontakt bringen des Detektors 3 mit einem die Dachfläche D befeuchtenden Medium M, in der Regel handelt es sich hierbei um Wasser, geschlossen.

Aufgrund der Abhängigkeit des Messsignales vom Abstand des Detektors 3 zur Leckage L kann der Bedienperson A durch eine Änderung des Messsignals angezeigt werden, ob sie den Detektor 3 zur Leckage hin oder von dieser weg bewegt. Diese Signalisierung kann wahlweise akustischer und/oder optischer Natur sein. Die Mittel zur Signalisierung können z.B. in dem Handgerät 7 als Leuchtmittel 41, als Zeigerinstrument 40, als ein Ton erzeugendes Mittel 42 wie z.B. ein Lautsprecher, ein Summer und dergleichen mehr ausgebildet sein.
Selbstverständlich ist auch eine Signalisierung über einen Kopfhörer 43 an die Bedienperson A möglich, was zusätzlich den Vorteil hat, dass Störgeräusche aus der Umgebung gegenüber der Abstandssignalisierung deutlich abgeschwächt werden können.

Von der Leckage L verläuft der Messkreis I über das die Dachfläche D durchdringende Medium M entlang des beispielhaft dargestellten Pfeiles 9 zur Austrittsstelle bzw. Tropfstelle 10 an der Deckenseite. Von dieser führt der Messkreis I über die Leitung 11 zurück zum Basisgerät 2.

Um nun erfindungsgemäß mindestens einen weiteren Messkreis II mit einem ihm zugeordneten Detektor 4 zur Ortung dieser und vorzugsweise einer weiteren Leckage L einsetzen zu können, wird das Prüfsignal zur Erzeugung eines weiteren individuellen Messsignals elektronisch moduliert. Dadurch ist eine Trennung, d.h. ein Ein- und Ausschalten der einzelnen Messsignale der hier beispielhaft möglichen Messkreise I - IV gewährleistet, so dass jeder Bedienperson A, B und gegebenenfalls weiteren Bedienpersonen eindeutig das dem jeweiligen Detektor zugeordnete Messsignal signalisiert werden kann.

Anstelle der Kontaktierung der Leitung 11 mit der Tropfstelle bzw. Austrittsstelle 10 kann ein Schließen der Messkreise I - IV auch über einen Masseanschluss 12 erfolgen. Z.B. kann bei einer schlechten Zugänglichkeit der Austrittsstelle 10 eine Masseverbindung mit einer Wasserleitung oder mit einer anderen Erdungsstelle des Gebäudes zum Schließen des Messkreises genutzt werden.

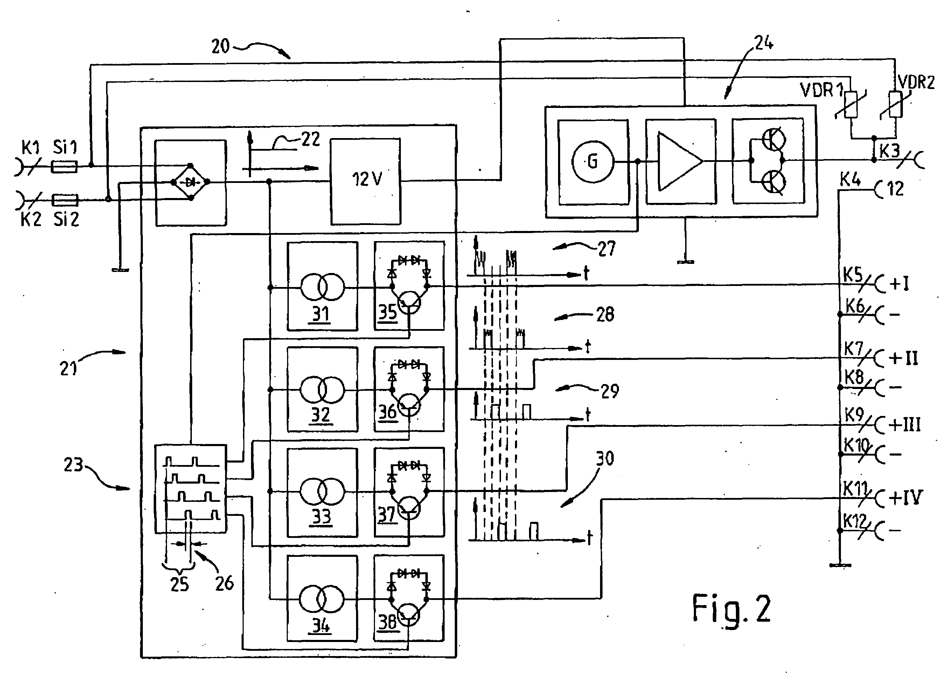

Die Figur 2 zeigt eine Schaltung 20 eines Basisgerätes 2, mit einem Netzteil 21, welches die vier beispielhaften Messkreise I - IV mit einem Prüfsignal 22 beaufschlägt. Um das Prüfsignal 22 moduliert auf die Messkreise I - IV aufschalten zu können, wird ein Modulationssignal 23 von einem Signalgenerator 24 erzeugt.

Das Modulationssignal 23 ist so gestaltet, dass während einer Zeiteinheit 25 vier Zeitfenster 26 generiert werden, in denen das Prüfsignal 22 über das Modulationssignal 23 derart auf die Messkreise I bis IV geschaltet wird, dass die Messsignale 27 bis 30 zeitversetzt aktiv sind. Damit ist erreicht, dass zu einem Zeitpunkt jeweils nur ein Messkreis I - IV aktiv ist. So kann eine störungsfreie Auswertung der den einzelnen Messkreisen I - IV zugeordneten Messsignale 27 bis 30 zuverlässig gewährleistet werden.

Das Prüfsignal 22 liegt dazu an vier weiteren Signalgeneratoren 31 bis 34 mit ihnen zugeordneten Schalteinheiten 35 bis 38 an. Hierbei kann es sich beispielsweise um Spannungsquellen zur Erzeugung jeweils einer 5 kHz-Wechselspannung handeln, die entsprechend der Taktung des Modulationssignals 23 auf die einzelnen Messkreise I - IV ausgeschalten werden können.

Die Amplitude des Messsignales ist ein Maß für den Abstand des dem jeweiligen Stromkreis I - IV zugeordneten Detektors 3, 4 usw. zu der gesuchten Leckage L. Je geringer der Abstand zwischen dem Detektor und der Leckage L ist, desto größer ist die Signalamplitude des jeweiligen Messsignales 27 bis 30.

Im vorliegenden Beispiel ist dieser Zusammenhang durch die Amplituden 27 bis 30 in Bezug auf die Figur 1 dargestellt. Die Amplitude des Messsignales 27 ist als Maß für den Abstand zwischen dem Detektor 3 und der Leckage L verhältnismäßig ' groß dargestellt. Die Signalamplitude des Messsignales 28 ist demgegenüber aufgrund des größeren Abstandes zwischen dem Detektor 4 und der Leckage L in der Figur 1 mit einer demgegenüber geringeren Signalamplitude dargestellt. In den Messsiganlen 29 und 30 sind lediglich die jedem Messsignal 27 bis 30 überlagerten Offset-Spannungen zu erkennen, ohne einen Signalausschlag aufgrund einer abstandsabhängigen Signalamplitude. Dies entspricht dem gegen unendlich gehenden Widerstand der beiden Messkreise III und IV in der Figur 1, aufgrund der Tatsache, dass an ihnen keine Leckagedetektoren angeschlossen sind.

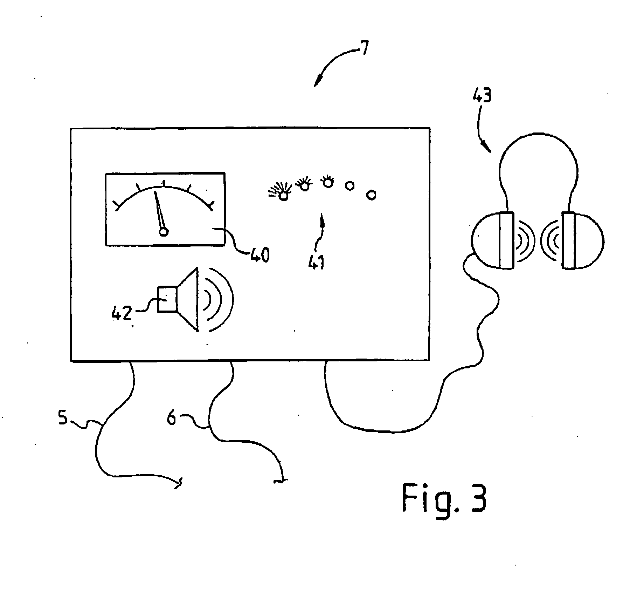

Zur Auswertung der Messsignale 27 bis 30 der einzelnen Messkreise I bis IV kann entweder das Basisgerät 2 oder das jeweilige Handgerät 7, 8 oder auch die Detektoren 3, 4 Mittel aufweisen, die zur Umsetzung der einzelnen Messsignale 27 bis 30 in akustische und/oder optische Signale geeignet sind. Die Figur 3 zeigt dazu beispielhaft eine Ausführungsform, bei der das Handgerät 7 zur optischen Signalisierung ein Zeigerinstrument 40 und Leuchtmittel. 41 umfasst. Zur akustischen Signalisierung sind ein Lautsprecher 42 und ein Kopfhörer 43 dargestellt. Der Anschluss des Handgerätes 7 ist entsprechend der Darstellung gemäß Figur 1 über die Leitungen 5 und 6 realisiert.

### Bezugszeichenliste:

- 1: Anordnung
- 2: Basisgerät
- 3: Detektor
- 4: Detektor
- 5: Leitung
- 6: Leitung
- 7: Handgerät
- 8: Handgerät
- 9: Pfeil
- 10: Austrittsstelle
- 11: Leitung
- 12: Masseanschluss

- 20: Schaltung
- 21: Netzteil
- 22: Prüfsignal
- 23: Modulationssignal
- 24: Signalgenerator
- 25: Zeiteinheit
- 26: Zeitfenster
- 27: Messsignal
- 28: Messsignal
- 29: Messsignal
- 30: Messsignal
- 31: Signalgenerator
- 32: Signalgenerator
- 33: Signalgenerator
- 34: Signalgenerator
- 35: Schalteinheit
- 36: Schalteinheit
- 37: Schalteinheit
- 38: Schalteinheit

- 40: optisches Signalgerät
- 41: optisches Signalgerät
- 42: akustisches Signalgerät
- 43: akustisches Signalgerät

- D: Dachfläche
- L: Leckage
- I: Messkreis
- II: Messkreis
- III: Messkreis
- IV: Messkreis
- M: Medium
- A: Bedienperson
- B: Bedienperson

## Patentansprüche

1. Anordnung (1) zur Ortung einer Leckage (L) an Feuchtigkeits-Abdichtschichten für Gebäudeteile (D), insbesondere an Dächern, Terrassen, Balkonen oder dgl., mit einem Basisgerät (2) zur Erzeugung wenigstens eines Prüfsignals in einem ersten Messkreis (I), und mit einem ersten mobilen Detektor (3), der über ein die Leckage (L) durchdringendes Medium (M) diesen ersten Messkreis (I) schließt, wobei ein von einer Entfernung des Detektors (3) zum Ort der Leckage (L) abhängiges Messsignal erzeugt wird, so dass durch eine Positionsveränderung des Detektors (3) eine Annäherung bzw. eine Entfernung zur gesuchten Leckage signalisiert wird, **dadurch gekennzeichnet, dass** der Anordnung mindestens ein weiterer Messkreis (II) mit einem weiteren Detektor (4) zur Ortung dieser und/oder einer weiteren Leckage (L) zugeordnet ist, wobei zur Erzeugung eines individuellen Messsignals das Prüfsignal als modulierte Wechselspannung ausgebildet ist, dessen Amplitude ein Maß für den Abstand des dem jeweiligen Stromkreis zugeordneten Detektors (3, 4) zu der gesuchten Leckage ist und wobei das Prüfsignal, insbesondere die Spannungsversorgung der Messkreise über ein Modulationssignal (23) derart auf die Messkreise (I, II) geschaltet wird, dass die Messsignale (27, 28) zeitversetzt aktiv sind.

2. Anordnung nach Anspruch 1, **dadurch gekennzeichnet, dass** zu einem Zeitpunkt jeweils nur ein Messkreis (I, II) aktiv ist, insbesondere für eine störungsfreie Auswertung der Messsignale (27, 28) der einzelnen Messkreise (I, II).

3. Anordnung nach Anspruch 1 oder 2, **dadurch gekennzeichnet, dass** das Prüfsignal ein elektrisches Potential ist.

4. Anordnung nach einem der vorangehenden Ansprüche, **dadurch gekennzeichnet, dass** das Messsignal (27, 28) eine erzeugte Signalamplitude ist.

5. Anordnung nach einem der vorangehenden Ansprüche, **dadurch gekennzeichnet, dass** die Auswertung der Messsignale (27, 28) der einzelnen Messkreise (I, II) im Basisgerät (2) vorgesehen ist.

6. Anordnung nach einem der vorangehenden Ansprüche, **dadurch gekennzeichnet, dass** die Auswertung der Messsignale (27, 28) der einzelnen Messkreise (I, II) im jeweiligen Detektor (3, 4) und/oder einem ihm zugeordneten Handgerät (7, 8) vorgesehen ist.

7. Anordnung nach einem der vorangehenden Ansprüche, **dadurch gekennzeichnet, dass** eine akustische Signalisierung der Messsignale (27, 28) der einzelnen Messkreise (I, II) vorgesehen ist.

8. Anordnung nach einem der vorangehenden Ansprüche, **dadurch gekennzeichnet, dass** eine optische Signalisierung der Messsignale der einzelnen Messkreise (I, II) vorgesehen ist.

9. Verfahren zur Ortung einer Leckage (L) an Feuchtigkeits-Abdichtschichten für Gebäudeteile (D), insbesondere an Dächern, Terrassen, Balkonen oder dgl., bei dem mit einem Basisgerät (2) wenigstens ein erstes Prüfsignal in einem ersten Messkreis (I) erzeugt wird, und bei dem mit einem ersten mobilen Detektor (3), der über ein die Leckage (L) durchdringendes Medium (M) diesen ersten Messkreis (I) schließt, ein von einer Entfernung des Detektors (3) zum Ort der Leckage (L) abhängiges Messsignal erzeugt wird, so dass durch eine Positionsveränderung des Detektors (3) eine Annäherung bzw. eine Entfernung zur gesuchten Leckage signalisiert wird, **dadurch gekennzeichnet, dass** mindestens ein weiterer Messkreis (II) mit einem weiteren Detektor (4) zur Ortung dieser und/oder einer weiteren Leckage (L) verwendet wird, wobei zur Erzeugung eines individuellen Messsignals das Prüfsignal als modulierte Wechselspannung ausgebildet ist, dessen Amplitude ein Maß für den Abstand des dem jeweiligen Stromkreis zugeordneten Detektors (3, 4) zu der gesuchten Leckage ist und wobei das Prüfsignal, insbesondere die Spannungsversorgung der Messkreise über ein Modulationssignal (23) derart auf die Messkreise (I, II), geschaltet wird, dass die Messsignale (27, 28) zeitversetzt aktiv sind.

## Claims

1. System (1) for locating a leakage (L) on moisture sealing coatings for building parts (D), in particular on roofs, terraces, balconies or the like, comprising a base unit (2) for generating at least one test signal in a first measuring circuit (I), and a first mobile detector (3) which closes said first measuring circuit (I) via a medium (M) penetrating the leakage (L), wherein a measuring signal is generated which is dependent on the distance of the detector (3) from the site of the leakage (L), so that by means of a change in position of the detector (3) an approach towards or distancing from the searched for leakage is signalled, **characterised in that** at least one additional measuring circuit (II) with an additional detector (4) is assigned to the system for locating the latter and/or an additional leakage (L), wherein to produce an individual measuring signal the test signal is in the form of a modulated AC voltage, the amplitude of which is a measure for the distance of the detector (3, 4) assigned to the respective circuit from the searched for leakage, and wherein the test signal, in particular the power supply to the measuring circuits is connected via a modulation signal (23) to the measuring circuits (I, II) such that the measuring signals (27, 28) are active in a timed-delayed manner.

2. System according to claim 1, **characterised in that** at one point in time only one measuring circuit (I, II) is active, in particular for the trouble-free evaluation of the measuring signals (27, 28) of the individual measuring circuits (I, II).

3. System according to claim 1 or 2, **characterised in that** the test signal is an electrical potential.

4. System according to any one of the preceding claims, **characterised in that** the measuring signal (27, 28) is a generated signal amplitude.

5. System according to any one of the preceding claims, **characterised in that** the evaluation of the measuring signals (27, 28) of the individual measuring circuits (I, II) is provided in the base unit (2).

6. System according to any one of the preceding claims, **characterised in that** the evaluation of the measuring signals (27, 28) of the individual measuring circuits (I, II) is provided in the respective detector (3, 4) and/or a hand device (7, 8) assigned thereto.

7. System according to any one of the preceding claims, **characterised in that** an acoustic signalling of the measuring signals (27, 28) of the individual measuring circuits (I, II) is provided.

8. System according to any one of the preceding claims, **characterised in that** an optical signalling of the measuring signals of the individual measuring circuits (I, II) is provided.

9. Method for locating a leakage (L) on moisture sealing coatings for building parts (D), in particular on roofs, terraces, balconies or the like, in which by means of a base unit (2) at least one first test signal is generated in a first measuring circuit (I), and in which by means of a first mobile detector (3) which closes said first measuring circuit (I) via a medium penetrating the leakage (L), a measuring signal dependent on the distance of the detector (3) to the site of the leakage (L) is generated, so that by means of a change in position of the detector (3) an approach towards or distancing from the searched for leak is signalled, **characterised in that** at least one additional measuring circuit (II) is used with an additional detector (4) for locating the latter and/or an additional leakage (L), wherein to generate an individual measuring signal the test signal is in the form of a modulated AC voltage, the amplitude of which is a measure for the distance of the detector (3, 4) assigned to the respective circuit from the searched for leakage, and wherein the test signal, in particular the power supply to the measuring circuit is connected via a modulation signal (23) to the measuring circuits (I, II) such that the measuring signals (27, 28) are active in a time-delayed manner.

## Revendications

1. Dispositif (1) pour localiser une fuite (L) dans des couches d'étanchéification d'humidité de parties de bâtiment (D), notamment de toitures, terrasses, balcons ou analogues, comprenant :
- un appareil de base (2) générant au moins un signal de contrôle dans un premier circuit de mesure (I) et un premier détecteur mobile (3) qui ferme ce premier circuit de mesure (I) par le milieu (M) qui traverse la fuite (L),
* en générant ainsi un signal de mesure dépendant de l'éloignement du détecteur (3) par rapport à l'endroit du point de fuite (L) de façon qu'en changeant la position du détecteur (3), on signale que l'on se rapproche ou s'éloigne de la fuite recherchée,
dispositif **caractérisé en ce qu'**
- il comporte au moins un autre circuit de mesure (II) avec un autre détecteur (4) pour localiser ce point de fuite et/ou un autre point de fuite (L), et
* pour générer un signal de mesure individuel, le signal de contrôle est un signal alternatif, modulé, dont l'amplitude est une mesure de la distance entre le détecteur (3, 4) associé au circuit électrique respectif et la fuite recherchée, et
* le signal de contrôle, notamment l'alimentation en tension des circuits de mesure étant faite par un signal de modulation (23) appliqué aux circuits de mesure (I, II) de façon que les signaux de mesure (27, 28) soient activés de manière décalée dans le temps.

2. Dispositif selon la revendication 1,
**caractérisé en ce qu'**
à un instant un seul signal de mesure (I, II) est actif, notamment pour exploiter de manière non perturbée des signaux de mesure (27, 28) des différents circuits de mesure (I, II).

3. Dispositif selon la revendication 1 ou 2,
**caractérisé en ce que**
le signal de contrôle est un potentiel électrique.

4. Dispositif selon l'une des revendications précédentes,
**caractérisé en ce qu'**
le signal de mesure (27, 28) est une amplitude de signal générée.

5. Dispositif selon l'une des revendications précédentes,
**caractérisé en ce que**
l'exploitation des signaux de mesure (27, 28) des différents circuits de mesure (I, II), se fait dans l'appareil de base (2).

6. Dispositif selon l'une des revendications précédentes,
**caractérisé en ce que**
l'exploitation des signaux de mesure (27, 28) des différents circuits de mesure (I, II), se fait dans le détecteur (3, 4) respectif et/ou dans un appareil manuel (7, 8) qui lui est associé.

7. Dispositif selon l'une des revendications précédentes,
**caractérisé en ce que**
les différents circuits de mesure (I, II) assurent une signalisation acoustique des signaux de mesure (27, 28).

8. Dispositif selon l'une des revendications précédentes,
**caractérisé par**
une signalisation optique des signaux de mesure des différents circuits de mesure (I, II).

9. Procédé de localisation d'une fuite (L) dans des couches d'étanchéification d'humidité de parties de constructions (D), notamment de toitures, de terrasses, de balcons ou structures analogues, selon lequel avec un appareil de base (2), on génère au moins un premier signal de contrôle dans un premier circuit de mesure (I) et avec un premier détecteur mobile (3), on ferme le premier circuit de mesure (I) avec le milieu (M) qui traverse le point de fuite (L), en générant un signal de mesure dépendant de la distance entre le détecteur (3) et l'emplacement de la fuite (L) de sorte qu'en changeant de position du détecteur (3), on signale que l'on se rapproche ou s'éloigne de la fuite recherchée, procédé **caractérisé en ce qu'**
on utilise au moins un autre circuit de mesure (II) avec un autre détecteur (4) pour localiser ce point de fuite et/ou un autre point de fuite (L), et
- pour générer un signal de mesure individuel, le signal de contrôle est une tension alternative modulée, dont l'amplitude est une mesure de la distance entre le détecteur (3, 4) associé au circuit de courant respectif et le point de fuite recherché, et
- le signal de contrôle, notamment l'alimentation en tension du circuit de mesure, est appliqué par un signal de modulation (23) aux circuits de mesure (I, II) pour que les signaux de mesure (27, 28) soient activés de manière décalée dans le temps.
